Europäisches Patentamt

European Patent Office

Office européen des brevets

(19)

(11) Veröffentlichungsnummer: **0 442 252 B1**

# EUROPÄISCHE PATENTSCHRIFT

(45) Veröffentlichungstag der Patentschrift: **22.02.95**

(51) Int. Cl.⁶: **G01B 11/00**

(21) Anmeldenummer: **90890319.8**

(22) Anmeldetag: **10.12.90**

(54) **Einrichtung zum Erfassen der Masse eines gegebenenfalls bewegten Gegenstandes.**

(30) Priorität: **16.02.90 AT 362/90**

(43) Veröffentlichungstag der Anmeldung:
**21.08.91 Patentblatt 91/34**

(45) Bekanntmachung des Hinweises auf die
Patenterteilung:
**22.02.95 Patentblatt 95/08**

(84) Benannte Vertragsstaaten:
**BE CH DE ES FR GB GR IT LI LU NL SE**

(56) Entgegenhaltungen:
**FR-A- 2 441 148**
**FR-A- 2 512 213**
**US-A- 3 806 253**

(73) Patentinhaber: **GEC ALSTHOM T&D GESELL-
SCHAFT m.b.H.**
**Franckstrasse 51**
**A-4020 Linz (AT)**

(72) Erfinder: **Wögerbauer, Johann-Peter**
**Steinbauerstrasse 7**
**A-4040 Linz (AT)**
Erfinder: **Hindinger, Siegfried**
**Kirchenstrasse 30**
**A-4053 Haid (AT)**
Erfinder: **Wachter, Bruno-Ronald**
**Elisabethstrasse 39**
**A-4600 Wels (AT)**

(74) Vertreter: **Rossboth, Werner Heinz**
**c/o GEC ALSTHOM T&D GESELLSCHAFT
m.b.H.**
**Franckstrasse 51**
**A-4020 Linz (AT)**

**Beschreibung**

Die Erfindung bezieht sich auf eine Einrichtung zum Erfassen des Durchmessers und bzw. oder Volumens eines gegebenenfalls bewegten Gegenstandes, insbesondere eines Holzstammes, mit einer optoelektronischen Meßeinrichtung, welche in einer quer zur Längsachse des Gegenstandes stehenden Meßebene angeordnete Sende- und Empfangs-Dioden sowie eine vor der Maßebene befindliche Lichtschranke und eine Auswerte-Einheit umfaßt, wobei der zu vermessende Gegenstand in der Meßebene zwischen den Sande- und den Empfangs-Dioden geführt ist und die Meßebene nach oben von zwar einen Winkel von 90 ° einschließenden Meßbalken eines Maßtores begrenzt wird, auf deren der Meßebene zugewandten Seitenflächen je eine Reihe von Sande-Dioden in engen konstanten Abständen angeordnet ist, wobei jeder diesar Reihen von Sande-Dioden in einem festen Abstand vom Meßbalken liegende Empfangs-Dioden zugeordnet sind und die Sende-Dioder durch die Auswerte-Einheit in kurzen konstanten Zeitabständen nacheinande jeweils zusammen fit den zugeordneten Empfangs-Dioden aktiviert werden.

Aus der AT-PS 351 282 ist eine Einrichtung zum Feststellen bzw. Überwachen der Maße eines gegebenenfalls bewegten Gegenstandes bekannt, bei der in zwei Ebenen, die einen Winkel von 90 ° einschließen, Zeilenkameras vorgesehen sind, welche anstatt eines Filmes eine Fläche mit Photo-Dioden-Zeilen zur Erzeugung des elektronischen Schattenbildes eines durch die Optik vor einem hellen Hintergrund gesehenen Gegenstandes besitzen.

Nachteilig ist bei dieser durch die Zeilenkameras relativ aufwendigen Einrichtung, daß das Schattenbild je nach Lage des Meßgegenstandes unscharf sein kann und die Meßgenauigkeit darunter leidet.

Nach dem Prinzip der periodischen Abtastung des Meßgegenstandes, bei dem zu einem bestimmten Zeitpunkt nie ein Gesamtbild des Meßgegenstandes erhaltan wird, arbeiten aus den DE-AS 2 019 290 und DE-OS 2 127 751 bekannte Vorrichtungen. Von nachteil ist bei diesen Vorrichtungen, daß mechanisch bewegte Lichtsender oder Spiegel erforderlich sind.

In der FR-A-2 512 213 werden ein Verfahren und eine Vorrichtung zum Erfassen der Maße eines bewegten Gegenstandes mit etwa kreisförmigem Querschnitt beschrieben. Zu beiden Seiten des zu vermessenden Gegenstandes sind auf parallelen Schienen in einer Reihe Sende-Dioden-Gruppen und dazwischen Empfangs-Dioden angeordnet. Jeder Sende-Diode sind auf der jeweils gegenüberliegenden Schiene wenigstens drei Empfangs-Dioden zugeordnet. Bei einem Meßvorgang werden die Sende-Dioden jeweils zusammen mit den zugeordneten Empfangs-Dioden nacheinander aktiviert. Die Orte der vielen Kreuzungen des entstehenden Strahlennetzwerkes sind durch die Geometrie der Vorrichtung bestimmt und in einer Elektronikeinheit gespeichert. Auf Grund der durch den Gegenstand belegten Kreuzungen längs einer Bezugslinie kann daher ein Durchmesser ermittelt werden. Die Meßgenauigkeit der relativ aufwendigen Vorrichtung ist jedoch von der Lage des Gegenstandes zur Bezugslinie abhängig und die Sende-Dioden müssen einen relativ weiten Lichtkegel aufweisen, um die jeweils zugeordneten Empfangs-Dioden erreichen zu können. Von den Sende-Dioden weiter entfernte Empfangs-Dioden erhalten ein nur schwaches Signal, das zur weiteren Verarbeitung einer hohen Verstärkung bedarf. Bei einer Ausführung für Überkreuzmessung weist die beschriebene Vorrichtung vier quadratisch und den zu vermessenden Gegenstand angeordnete Schienen mit Sende- und Empfangs-Dioden-Gruppen auf.

Durch die in der Folge aufgezeigte erfindungsgemäße Ausfuhrung gemäß Anspruch 1 wird eine Einrichtung der eingangs genannten Art bezweckt, bei welcher die vorangeführten Nachteile vermieden werden können und die auf wirtschaftliche Art die exakte Erfassung der Maße eines gegebenenfalls bewegten Gegenstandes mit eichfähiger Genauigkeit und hoher Zuverlässigkeit ermöglicht.

Dies wird insbesondere dadurch erreicht, daß die Reihen von Sende-Dioden innerhalb von Sendebalken angeordnet sind und jedem Sendebalken nur je eine einzige mittig zum Sendebalken liegende Empfangs-Diode zugeordnet ist, wobei die Sende-Dioden durch die Auswerte-Einheit nacheinander von oben nach unten jeweils zusammen mit der einzigen zugeordneten Empfangs-Diode aktiviert werden.

Auf Grund der konstanten Abstände und Zahl der Sende-Dioden sowie der in einem festen Abstand symmetrisch zum jeweiligen Sendebalken liegenden Empfangs-Dioden wird auf rein optoelektronischem Wege eine exakte Erfassung der Maße des Gegenstandes erreicht. Durch die in kurzen konstanten Zeitabständen nacheinander von oben nach unten jeweils zusammen mit der zugeordneten Empfangs-Diode erfolgende elektronische Aktivierung der Sende-Dioden ergibt sich einerseits eine praktisch kontinuierliche Meßwertermittlung, anderseits eine hohe Zuverlässigkeit, weil am Förderer des Meßgegenstandes liegende Holz- oder Rindenstücke meßtechnisch nicht mehr erfaßt werden.

Die Reihe der Sende-Dioden im Sendebalken bildet etwa einen Kreisbogen, in dessem Mittelpunkt die zugeordnete Empfangs-Diode angeordnet ist. Die Zuverlässigkeit kann dadurch wesentlich gesteigert und die Fremdlichtunempfindlichkeit erhöht werden. Interferenzen zwischen den einzelnen Sende-Dioden sind praktisch ausgeschlossen.

Eine besonders wirtschaftliche und wartungsfreundliche Ausfuhrung wird erreicht, wenn die Reihe der Sende-Dioden in gleiche Teilstücke unterteilt ist, wobei die Sende-Dioden jedes Teilstuckes auf einer gleichförmigen Leiterplatte angeordnet sind.

Jedes Teilstuck der Sende-Dioden-Reihe kann dabei eine Reihe von 64 Sende-Dioden aufweisen und in jedem Sendebalken können acht Teilstücke untergebracht sein.

Der modulartige Aufbau der Sende-Dioden-Reihe ermöglicht nicht nur eine Minimierung des Verdrahtungsaufwandes, sondern auch ein leichtes Auswechseln von Teilstücken mit verbrauchten Sende-Dioden.

Zum Schutze der Sende-Dioden gegen äußere Einflüsse besteht jeder Sendebalken aus einem dichten Gehäuse mit einem im Bereich dar Meßebene durchgehenden, von einem Glas abgedeckten Längsschlitz, dessen Länge wenigstens jener der Sende-Dioden-Reihe entspricht.

Bevorzugterweise ist jede Empfangs-Diode in einem dichten Gehäuse mit einem von einem Glas abgedeckten Fenster zum zugeordneten Sendebalken hin angeordnet, wobei das Gehäuse zwischen zwei mit einem Steher des Meßtores fest verbundenen, rechteckigen Platten montiert ist, welche seitlich über das Gehäuse vorstehen.

Die Empfangs-Dioden sind dadurch nicht nur gegen äußere Einflüsse, sondern auch Fremdlicht geschützt und auf einfache Art montier- und auswechselbar.

Eine optimale Zuverlässigkeit der erfindungsgemäßen Einrichtung wird erzielt, wenn die Sende-Dioden aus Infrarot-Sende-Dioden mit einer Wellenlänge von etwa 950 nm bestehen und die Empfangs-Dioden als Infrarot-Photo-Dioden mit einer empfindlichen Fläche von 2,5 x 6 mm ausgebildet sind.

Die Maße des Gegenstandes können dadurch praktisch kontinuierlich mit einer Genauigkeit von ein bis zwei Millimetern erfaßt werden.

Bevorzugterweise besteht die Auswerte-Einheit aus einem Mikroprozessor-System mit Speichereinheit das die Sende- und Empfangs-Dioden synchron in einer Taktfrequenz von 160 kHz aktiviert.

Obwohl die Auswerte-Einheit aus handelsüblichen integrierten Schaltkreisen einfach zu verwirklichen ist, können Mikroprozessoren preisgünstiger zu erhalten und auch leichter anpaßbar sein. Durch die gewählte Taktfrequenz wird eine praktisch kontinuierliche Meßwerterfassung über die ganze Länge des Meßgegenstandes erzielt.

Die Auswerte-Einheit kann zur Zählung der bei einem Meßvorgang aus den Empfangs-Dioden erhaltenen Signale und, mit Hilfe des ersten wiederkommenden Signales nach der durch den Gegenstand verursachten Signalunterbrechung, zur Ermittlung und Speicherung der Zahl jener Sende-Dioden der beiden Sendebalken, deren Strahl nicht zur zugeordneten Empfangs-Diode gelangen konnte, ausgebildet sein. Damit sind in der Auswerte-Einheit äquivalente Werte für die Maße und die Lage des Gegenstandes gespeichert.

Bei einer weiteren Ausführung kann die Auswerte-Einheit zur Erfassung und Anzeige des Durchmessers und bzw. oder Volumens des Gegenstandes aus den gezählten Signalen der beiden Empfangs-Dioden, den ermittelten Zahlen jener Sende-Dioden der beiden Signalbalken, deren Strahl durch den Gegenstand nicht zur zugeordneten Empfangs-Diode gelangen konnte, und der konstanten Länge der beiden Sende-Dioden-Reihe sowie den konstanten Abständen der Sende-Dioden-Reihe zu ihren zugeordneten Empfangs-Dioden und den beiden Empfangs-Dioden zueinander, unter Erzeugung eines die Distanz zwischen dem Gegenstand und den Empfangs-Dioden berücksichtigenden Lagesignals ausgebildet sein.

Mit Hilfe eines gespeicherten Algorithmusses kann die Auswerte-Einheit aus diesen Werten mathematisch das Maß, beispielsweise den Durchmesser eines Holzstammes, exakt errechnen. Vorzugsweise wird dem Algorithmus der Sinussatz zugrundegelegt.

In einer Weiterbildung kann die Auswerte-Einheit so ausgebildet sein, daß sie die Aktivierung der Sende- und Empfangs-Dioden bis zum nächsten Meßvorgang unterbricht, sobald sie das erste wiederkommende Signal nach der durch den Gegenstand verursachten Signalunterbrechung aus den Empfangs-Dioden erhalten hat.

Dadurch kann nicht nur der Meßvorgang beschleunigt, sondern auch eine exaktere Messung erreicht werden, weil eine Unterdrückung von Verfälschungen des Meßergebnisses durch am Kettenförderer liegender Holz- oder Rindenstücke erfolgt. Soferne nämlich nach dem ersten wiederkommenden Signal aus den Empfangs-Dioden durch vom Holzstamm abstehende Rindenstücke oder am Förderer liegende, in die Meßebene hineinragende Holz- oder Rindenstücke wieder eine Signalunterbrechung erfolgt, wird diese unterdrückt und nicht mehr für die Durchmesserrechnung herangezogen. Als Maß für den Durch-Messer gilt immer nur die Zahl jener benachbarten Sende-Dioden der beiden Signalbalken, deren Strahl durch den Holzstamm unterbrochen wurde.

Die Auswerte-Einheit kann eine serielle Schnittstelle zur Protokollierung und Weiterverarbeitung der erfaßten Maße das Gegenstandes, z.B. in einem Rechner, besitzen.

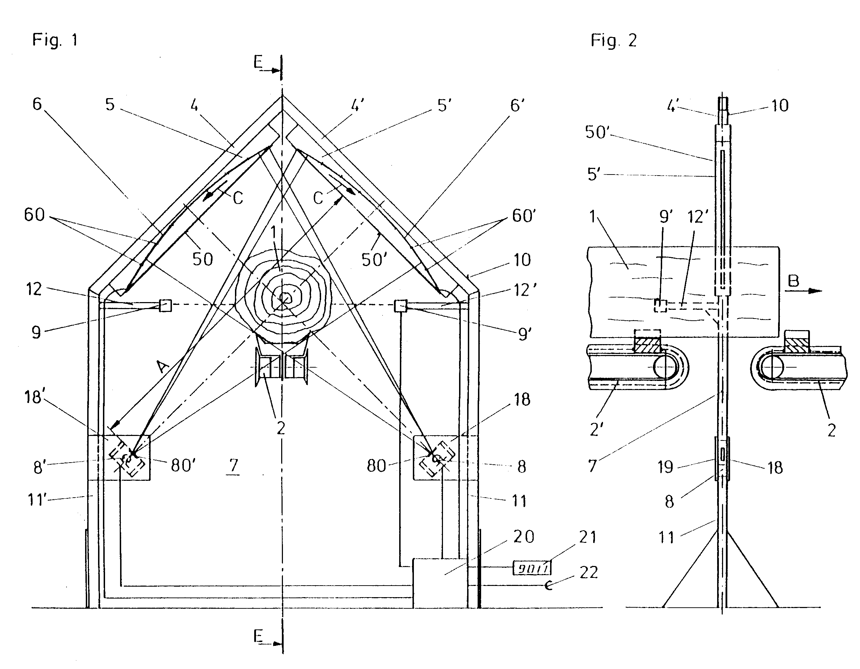

Im folgenden wird an Hand der beiliegenden Zeichnung ein Ausführungsbeispiel des Erfindungsgegenstandes näher erläutert. Es zeigen: Fig. 1 den Aufriß einer erfindungsgemäßen Einrichtung und Fig. 2 die Schnittdarstellung der Einrichtung gemäß der Linie E-E in Fig. 1.

In Fig. 1 ist schematisch ein Kettenförderer 2 dargestellt, auf welchem ein Holzstamm 1 in Richtung des Pfeiles B (Fig. 2) transportiert wird. Im Bereich der Meßebene 1 (Fig. 2) bzw. des Meßtores 10 ist der Kettenförderer 2 geteilt, um Beeinflussungen der Meßvorgänge zu vermeiden. Anstatt der Teilung des Kettenförderers 2, 2' (Fig. 2) könnte jedoch auch eine Umlenkrolle oder ein die Meßeinrichtung nicht behindernder Spalt in der Fuhrung des Kettenförderers vorgesehen sein.

Zur Erfassung der Durchmesser bzw. des Volumens des Holzstammes 1 ist ein aus den Stehern 11, 11' und Meßbalken 4, 4' bestehendes Meßtor 10 vorhanden, durch welches der Holzstamm 1 fährt. Steher 11, 11' und Meßbalken 4, 4' bestehen aus Metallprofilen und sind fest miteinander verbunden. Die symmetrisch angeordneten Meßbalken 4, 4' schließen einen Winkel von 90 ° ein. Das Meßtor 10 ist senkrecht zu seiner Grundfläche aufgestellt und stabil verankert. Auf den der Meßebene 7 zugewandten Seitenflächen der Meßbalken 4, 4' ist je ein Sendebalken 5, 5' montiert. Die Sendebalken 5, 5' bestehen aus dichten Gehäusen mit einem im Bereich der Meßebene 7 durchgehenden, von einem Glas abgedeckten Längsschlitz 50, 50'.

Im Inneren der Sendebalken 5, 5' ist etwa in einem Kreisbogen eine Reihe von Infrarot-Sende-Dioden 6, 6' bzw. lichtemittierende Dioden (LED) in engen, konstanten Abständen von etwa 3 mm angeordnet. Die Reihe der Infrarot-Sende-Dioden 6, 6' ist aus gleichen Teilstücken 60, 60' mit je einer mit 64 Infrarot-Sande-Dioden 6, 6' bestückten Leiterplatte aufgebaut. Dadurch ist eine leichte Montier- und Austauschbarkeit gegeben, außerdem kann durch den modulartigen Aufbau eine wirtschaftliche Fertigung erzielt werden.

Im Mittelpunkt des Kreisbogens der beiden Infrarot-Sande-Dioden-Reihe 6, 6' befindet sich in einem festen Abstand A zu den Sendebalken 5, 5' ja eine Infrarot-Photo-Diode 8, 8' bzw. Photo-Diode mit Intrinsicschicht (PIN).

Diese Infrarot-Photo-Dioden 8, 8' sind je in einem dichten Gehäuse mit einem von einem Glas abgedeckten Fenster 80, 80' zum zugeordneten Sendebalken 5, 5' bzw. deren Längsschlitz 50, 50' hin angeordnet, wobei das Gehäuse zwischen zwei mit einem Steher 11, 11' des Meßtores 10 fest verbundenen, rechteckigen Platten 18, 19; 18', 19' montiert ist, die seitlich über das Gehäuse vorstehen. Die Platten 18, 19, 18', 19' sind an ihrem dem Gehäuse zugewandten Flächen schwarz gefärbt, so daß die Infrarot-Photo-Dioden8, 8' gegen Fremdlicht und Spiegelungen gut geschützt sind.

An Auslegern 12, 12' des Meßtores 10 ist eine Infrarot-Lichtschranke 9, 9' montiert. Soferne der Holzstamm 1 diese Infrarot-Lichtschranke 9, 9' durchfährt, werden die Meßvorgänge ausgelöst. Aus der Dauer der Unterbrechung der Infrarot-Lichtschranke 9, 9' und der Geschwindigkeit des Kettenförderers 2, 2' ist außerdem die Länge des Holzstammes 1 exakt errechenbar. Eine Überwachung oder Aufnahme der Geschwindigkeit des Kettenförderers 2, 2' kann auf herkömmliche Art über einen gekoppelten Impulsgeber erfolgen.

Die Auswerte-Einheit 20 ist elektrisch mit den beiden Infrarot-Sende-Dioden-Reihen 6, 6', Infrarot-Photo-Dioden 8, 8' und der Infrarot-Lichtschranke 9, 9' verbunden, wie in Fig. 2 schematisch dargestellt ist.

An die Auswerte-Einheit 20 ist außerdem ein Flüssigkristalldisplay 21 zur digitalen Anzeige der Meßwerte angeschlossen. Eine serielle Schnittstelle 22 dient zur Weiterverarbeitung und Protokollierung der Meßwerte.

Aus Fig. 2 ist ersichtlich, daß der Holzstamm 1 gerade das Meßtor 10 bzw. die Meßebene 7 durchfährt und sich sein eines Ende gerade über dem geteilten Kettenförderer 2, 2' befindet. Nach dem Passieren der Lichtschranke 9, 9' wurden in der Auswerte-Einheit 20 die Meßvorgänge ausgelöst.

Nach dieser Auslösung und einer eingestellten Verzögerung für jene Zeit, die der Holzstamm 1 braucht, um zur Meßebene 7 zu gelangen, beginnt der erste Meßvorgang. Die aus einem Mikroprozessorsystem mit Speichereinheit bestehende Auswerte-Einheit 20 aktiviert dabei die Infrarot-Sende-Dioden 6, 6' und zugeordneten Infrarot-Photo-Dioden 8, 8' synchron mit einer Taktfrequenz von 160 kHz von oben nach unten in Richtung der Pfeile C (Fig. 1). Jeder von den beiden Infrarot-Photo-Dioden 8, 8' empfangene Strahl aus den zugeordneten Sendebalken 5, 5' erzeugt ein elektrisches Signal in der jeweiligen Infrarot-Photo-Diode 8, 8'. Diese Signale werden von der Auswerte-Einheit 20 in Zuordnung zur Infrarot-Photo-Diode 8, 8' gezählt und gespeichert. Nach dem ersten wiederkommenden Signal nach der durch den Holzstamm 1 verursachten Signalunterbrechung aus der Infrarot-Photo-Diode 8 und jenem Signal aus der Infrarot-Photo-Diode 8' ermitteln die Auswerte-Einheit 20 die Zahl jener Infrarot-Sende-Dioden 6, deren Strahl vom Holzstamm 1 unterbrochen wurde. Ebenso wird die Zahl der Infrarot-Sende-Dioden 6', deren Strahl unterbrochen wurde, ermittelt und gespeichert, wobei sich die Zahlen aus der Taktzahl während der Signalunterbrechungen ergeben.

Auf Grund der gegebenen Geometrie der optoelektronischen Meßeinrichtung, d. h. feste Abstände zwischen den Infrarot-Sende-Dioden-Reihen 6, 6' und zugeordneten Infrarot-Photo-Dioden 8, 8' sowie den beiden Infrarot-Photo-Dioden 8, 8' und dem rechten Winkel zwischen den beiden Sendebalken 5, 5', können bei bekannter Kreisbogenlänge der Infrarot-Sende-Dioden-Reihe 6, 6' und Lage sowie Zahl jener Infrarot-Sende-Dioden, deren Strahl vom Holzstamm 1 unterbrochen wurde, sowohl der Durchmesser, als auch die Entfernung des Mittelpunktes des Holzstammes 1 errechnet werden.

Bildet man beispielsweise ein Dreieck zwischen dem Mittelpunkt des Holzstammes 1 und den beiden Infrarot-Photo-Dioden 8, 8' und bezeichnet die spitzen Winkel dieses Dreiecks mit $\alpha, \beta$ und den stumpfen Winkel mit $\gamma$ sowie den Abstand der beiden Infrarot-Photo-Dioden 8, 8' mit c, so errechnen sich die Entfernungen a, b des Mittelpunktes von den beiden Infrarot-Photo-Dioden 8, 8' unter Anwendung des Sinussatzes nach folgenden Formeln:

$$a = \frac{\sin \alpha \cdot c}{\sin \gamma} \qquad b = \frac{\sin \beta \cdot c}{\sin \gamma}$$

Es versteht sich, daß nach bekannten Formeln auch die Winkel, den die Durchmesser des Holzstammes 1 einschließen, bzw. die Durchmesser selbst unter Berücksichtigung der Lage des Holzstammes 1 zu errechnen sind, so daß auf nähere Erläuterungen verzichtet werden kann.

In der Auswerte-Einheit 20 ist ein den benötigten Formeln entsprechender Algorithmus programmiert, welcher die exakte Errechnung der Durchmesser des Holzstammes 1 erlaubt, wobei auch eine Temperaturkompensation vorgesehen ist.

An gut sichtbarer Stelle können am Meßtor 10 und bzw. oder an der Auswerte-Einheit 20 rote oder grüne lichtemmitierende Dioden vorgesehen sein, welche einen Taktfrequenzausfall oder das Vorhandensein der Sendespannung signalisieren.

Die einzelnen Meßvorgänge können von der Auswerte-Einheit 20 so gesteuert sein, daß ein Mittendurchmesser des Holzstammes 1 arithmetisch ermittelt werden kann.

Über die Schnittstelle 22 der Auswerte-Einheit 20 kann ein Protokolliergerät bzw. ein Bildschirm mit Drucker angeschlossen sein, so daß die einzelnen Durchmesser, Mittendurchmesser, Länge und Ident-Nr. des Holzstammes 1 angezeigt und ausgedruckt werden können.

Die Auswerte-Einheit 20 kann auch so ausgerüstet sein daß der weitere Anschluß von Störungsmeldungen bei Verschmutzung der optoelektronischen Meßeinrichtung, Überschreitung des Meßbereiches, Ausfall des Kettenförderers 2, 2' oder aber auch übergeordneter Rechner möglich wird.

Durch das stabil ausgeführte Meßtor 10, mit dem die Sendebalken 5, 5', Infrarot-Photo-Dioden 8, 8' und die Lichtschranke 9, 9' fest verbunden sind, wird eine äußerst robuste und zuverlässige Einrichtung zum Erfassen des Durchmessers und bzw. oder Volumens eines Holzstammes 1 erreicht. Die Meßgenauigkeit ergibt sich im wesentlichen aus der Anzahl der Infrarot-Sende-Dioden 6, 6' im Sendebalken 5, 5'. Bei dem beschriebenen Ausführungsbeispiel enthalten die Sendebalken 5, 5' je 512 Infrarot-Sende-Dioden 6, 6', durch versetzte Anordnung könnte diese Anzahl jedoch ohne weiteres verdoppelt werden.

**Patentansprüche**

1. Einrichtung zum Erfassen des Durchmessers und bzw. oder Volumens eines gegebenenfalls bewegten Gegenstandes (1), insbesondere eines Holzstammes, mit einer optoelektronischen Meßeinrichtung, welche in einer quer zur Längsachse des Gegenstandes (1) stehenden Meßebene (7) angeordnete Sende- und Empfangs-Dioden (6, 6'; 8, 8') sowie eine vor der Meßebene (7) befindliche Lichtschranke (9, 9') und eine Auswerte-Einheit (20) umfaßt, wobei der zu vermessende Gegenstand (1) in der Meßebene (7) zwischen den Sende- und den Empfangs-Dioden (6, 6'; 8, 8') geführt ist und die Meßebene (7) nach oben von zwei einen Winkel von 90° einschließenden Meßbalken (4, 4') eines Meßtores (10) begrenzt wird, auf deren der Meßebene (7) zugewandten Seitenflächen je eine Reihe von Sende-Dioden (6, 6') in engen, konstanten Abständen angeordnet ist, wobei diesen Reihen von Sende-Dioden (6, 6') in einem festen Abstand von den Meßbalken (4, 4') liegende Empfangs-Dioden (8, 8') zugeordnet sind und die Sende-Dioden (6, 6') durch die Auswerte-Einheit (20) in kurzen konstanten Zeitabständen nacheinander jeweils zusammen mit den zugeordneten Empfangs-Dioden (8, 8') aktiviert werden, dadurch gekennzeichnet, daß die Reihen von Sende-Dioden (6, 6') innerhalb von auf den der Meßebene (7) zugewandten Seitenflächen der Meßbalken montierten Sendebalken (5, 5') angeordnet sind und jedem Sendebalken (5, 5') nur je eine einzige mittig zum Sendebalken (5, 5') liegende Empfangs-Diode (8, 8') zugeordnet ist, wobei die Reihe der Sende-Dioden (6, 6') im Sendebalken (5, 5') etwa einen Kreisbogen bildet, in dessem Mittelpunkt die zugeordnete Empfangs-Diode (8, 8') angeordnet ist und die Sende-Diode (6, 6') durch die Auswerte-Einheit (20) nacheinander von oben nach unten jeweils zusammen mit der einzigen zugeordneten Empfangs-Diode (8, 8') aktiviert werden.

2. Einrichtung nach Anspruch 1, dadurch gekennzeichnet, daß die Reihe der Sende-Dioden (6, 6') in gleiche Teilstücke (60, 60') unterteilt ist, wobei die Sende-Dioden (6, 6') jedes Teilstückes (60, 60') auf einer gleichförmigen Leiterplatte angeordnet sind.

3. Einrichtung nach einem der Ansprüche 1 bis 2, dadurch gekennzeichnet, daß jeder Sendebalken (5, 5') aus einem dichten Gehäuse mit einem im Bereich der Meßebene (7) durchgehenden, von einem Glas abgedeckten Längsschlitz (50, 50') besteht, dessen Länge wenigstens jener der Sende-Dioden-Reihe (6, 6') entspricht.

4. Einrichtung nach einem der Ansprüche 1 bis 3, dadurch gekennzeichnet, daß jede Empfangs-Diode (8, 8') in einem dichten Gehäuse mit einem von einem Glas abgedeckten Fenster (80, 80') zum zugeordneten Sendebalken (5, 5') hin angeordnet ist, wobei das Gehäuse zwischen zwei mit einem Steher (11, 11') des Meßtores (10) fest verbundenen, rechteckigen Platten (18, 19; 18', 19') montiert ist, welche seitlich über das Gehäuse vorstehen.

5. Einrichtung nach einem der Ansprüche 1 bis 4, dadurch gekennzeichnet, daß die Sende-Dioden (6, 6') aus Infrarot-Sende-Dioden mit einer Wellenlänge von etwa 950 nm bestehen und die Empfangs-Dioden (8, 8') als Infrarot-Photo-Dioden mit einer empfindlichen Fläche von 2,5 x 6 mm ausgebildet sind.

6. Einrichtung nach einem der Ansprüche 1 bis 5, dadurch gekennzeichnet, daß die Auswerte-Einheit (20) aus einem Mikroprozessorsystem mit Speichereinheit besteht und die Sende- und Empfangs-Dioden (6, 6'; 8, 8') synchron in einer Taktfrequenz von 160 kHz aktiviert werden.

7. Einrichtung nach einem der Ansprüche 1 bis 6, dadurch gekennzeichnet, daß die Auswerte-Einheit (20) zur Zählung der bei einem Meßvorgang aus den Empfangs-Dioden (8, 8') erhaltenen Signale und, mit Hilfe des ersten wiederkommenden Signal es nach der durch den Gegenstand (1) verursachten Signalunterbrechung, zur Ermittlung und Speicherung der Zahl jener Sende-Dioden (6, 6') der beiden Sendebalken (5, 5'), deren Strahl nicht zur zugeordneten Empfangs-Diode (5, 5') gelangen konnte, ausgebildet ist.

8. Einrichtung nach einem der Ansprüche 1 bis 7, dadurch gekennzeichnet, daß die Auswerte-Einheit (20) zur Erfassung und Anzeige des Durchmessers und bzw. oder Volumens des Gegenstandes (1) aus den gezählten Signalen der beiden Empfangs-Dioden (8, 8'), den ermittelten Zahlen jener Sende-Dioden (6, 6') der beiden Signalbalken (5, 5'), deren Strahl durch den Gegenstand (1) nicht zur zugeordneten Empfangs-Diode (8, 8') gelangen konnte, und der konstanten Länge der beiden Sende-Dioden-Reihen (6, 6') sowie den konstanten Abständen der Sende-Dioden-Reihen (6, 6') zu ihren zugeordneten Empfangs-Dioden (8, 8') und den beiden Empfangs-Dioden (8, 8') zueinander, unter Erzeugung eines die Distanz zwischen dem Gegenstand (1) und den Empfangs-Dioden (8, 8') berücksichtigenden Lagesignals ausgebildet ist.

9. Einrichtung nach einem der Ansprüche 1 bis 8, dadurch gekennzeichnet, daß die Auswerte-Einheit (20) ausgebildet ist, um die Aktivierung der Sande- und Empfangs-Dioden (6, 6' ; 8, 8') bis zum nächsten Meßvorgang zu unterbrechen, sobald sie das erste wiederkommende Signal nach der durch den Gegenstand (1) verursachten Signalunterbrechung aus den Empfangs-Dioden (8, 8') erhalten hat, und eine serielle Schnittstelle (22) zur Protokollierung und Weiterverarbeitung der erfaßten Maße des Gegenstandes (1) besitzt.

**Claims**

1. Device to detect the diameter and/or volume of a possibly moving object (1), especially a log, having an opto-electronic measuring device which comprises transmitting and receiving diodes (6, 6'; 8, 8') arranged in a measuring plane (7) transverse to the longitudinal axis of the object (1) and a light barrier (9,9') in front of the measuring plane (7) and an evaluation unit (20), the object (1) to be measured being guided in the measuring plane (7) between the transmitting and receiving diodes (6,6'; 8,8') and the measuring plane (7) being bounded above by two measuring bars (4, 4'), enclosing an angle of 90°, of a measuring gate (10), on whose respective side surfaces facing the measuring plane (7) a row of transmitting diodes (6, 6') is arranged at close, constant spacings, these rows of transmitting diodes (6, 6') being assigned receiving diodes (8, 8') which are at a fixed spacing from the measuring bars (4, 4') and the transmitting diodes (6, 6') being activated by the evaluation unit (20) successively at short constant time intervals, in each case together with the associated receiving diodes (8, 8'), characterized in that the rows of transmitting diodes (6, 6') are arranged inside transmitting bars (5, 5') mounted on the side surfaces of the measuring bars facing the measuring plane (7) and each transmitting bar (5, 5') has assigned to it only one single receiving diode (8, 8') which is in the middle of the transmitting bar (5, 5'), the row of transmitting diodes (6, 6') in the transmitting bar (5, 5') forming approximately an arc of a circle in whose centre point the associated receiving diode (8, 8') is arranged and the transmitting diodes (6, 6') being activated by the evaluation unit (20) successively from top to bottom, in each case together with the single associated receiving diode (8, 8').

2. Device according to Claim 1, characterized in that the row of transmitting diodes (6,6') is subdivided into equal parts (60, 60'), the transmitting diodes (6, 6') of each part (60, 60') being arranged on a uniform printed circuit board.

3. Device according to Claims 1 or 2, characterized in that each transmitting bar (5, 5') consists of an opaque housing having a longitudinal slit (50, 50') penetrating in the region of the measuring plane (7) and covered by a glass, the length of the said slit corresponding at least to that of the row of transmitting diodes (6, 6').

4. Device according to one of Claims 1 to 3, characterized in that each receiving diode (8, 8') is arranged in an opaque housing having a window (80, 80'), covered by a glass, towards the associated transmitting bar (5, 5'), the housing being mounted between two rectangular plates (18, 19; 18', 19') fixed permanently to an upright (11, 11') of the measuring gate (10), the plates projecting laterally beyond the housing.

5. Device according to one of Claims 1 to 4, characterized in that the transmitting diodes (6, 6') consist of infrared transmitting diodes having a wavelength of about 950 nm and the receiving diodes (8, 8') are designed as infrared photodiodes having a sensitive area of 2,5 x 6 mm.

6. Devide according to one of Claims 1 to 5, characterized in that the evaluation unit (20) consists of a microprocessor system with a storage unit and the transmitting and receiving diodes (6,6'; 8,8') are activated synchronously at a clock frequency of 160 kHz.

7. Device according to one of Claims 1 to 6, characterized in that the evaluation unit (20) is designed to count the signals obtained from the receiving diodes (8, 8') in a measuring process and, with the aid of the first signal returning after the signal interruption caused by the object (1), to determine and store the number of those transmitting diodes (6, 6') of the two transmitting bars (5, 5') whose beam could not reach the associated receiving diode (8, 8').

8. Device according to one of Claims 1 to 7, characterized in that the evaluation unit (20) is designed to detect and display the diameter and/or volume of the object (1) from the signals counted from the two receiving diodes (8, 8'), the numbers determined of those transmitting diodes (6, 6') of the two transmitting bars (5,5') whose beam could not reach the associated receiving diode (8, 8') through the object (1), and the constant length of the two rows of transmitting diodes (6, 6') and the constant spacings of the rows of transmitting diodes (6, 6') from their associated receiving diodes (8, 8') and of the two receiving diodes (8, 8') from each other, while generating a position signal taking into account the distance between the object (1) and the receiving diodes (8, 8').

9. Device according to one of Claims 1 to 8, characterized in that the evaluation unit (20) is designed in order to interrupt the activation of the transmitting and receiving diodes (6,6'; 8,8') until the next measuring process as soon as it has obtained from the receiving diodes (8,8') the first signal returning after the signal interruption caused by the object (1), and has a serial interface (22) for reporting and further processing of the detected dimensions of the object (1).

**Revendications**

1. Dispositif de saisie du diamètre et/ou du volume d'un objet (1) éventuellement mobile, en particulier d'un tronc d'arbre, comportant un dispositif de mesure optoélectronique qui comprend des diodes d'émission et de réception (6,6'; 8, 8') disposées dans un plan de mesure (7) placé perpendiculairement à l'axe longitudinal de l'objet (1) ainsi qu'une barrière lumineuse (9,9') se trouvant en avant du plan de mesure (7) et qu'une unité de traitement (20), l'objet à mesurer (1) passant dans le plan de mesure (7) entre les diodes d'émission et les diodes de réception (6,6'; 8, 8') et le plan de mesure (7) étant limité vers le haut par deux poutres de mesure (4, 4') d'un portique de mesure (10) qui font entre elles un angle de 90 ° et sur chacune des surfaces latérales, orientées vers le plan de mesure (7), desquelles est disposée une rangée de diodes d'émission (6, 6') à faibles intervalles constants, des diodes de réception (8, 8'), situées à distance fixe des poutres de mesure (4, 4'), correspondant à ces rangées de diodes d'émission (6, 6') et les diodes d'émission (6, 6') étant successivement activées par l'unité de traitement (20), à brefs intervalles de temps constants, en même temps que les diodes de réception (8, 8') correspondantes, caractérisé par le fait que les rangées de diodes d'émission (6, 6') sont disposées à l'intérieur de poutres d'émission (5, 5') montées sur les surfaces latérales, orientées vers le plan de mesure (7), des poutres de mesure et qu'à chaque poutre de mesure (5, 5') ne correspond qu'une unique diode de réception (8, 8') située au centre par rapport à la poutre de mesure (5, 5'), la rangée des diodes d'émission (6, 6') dans la poutre d'émission (5, 5') formant à peu près un arc de cercle au centre duquel est disposée la diode de réception (8, 8') correspondante et les diodes d'émission (6, 6') étant successivement activées par l'unité de traitement (20), de haut en bas, chaque fois en même temps que l'unique diode de réception (8, 8') correspondante.

2. Dispositif selon la revendication 1, caractérisé par le fait que la rangée des diodes d'émission (6, 6') se divise en portions identiques (60, 60'), les diodes d'émission (6, 6') de chaque portion (60, 60') étant disposées sur une carte à circuit imprimé de forme identique.

3. Dispositif selon la revendication 1 ou 2, caractérisé par le fait que quaque poutre d'émission (5, 5') est constituée d'un boîtier étanche présentant une fente longitudinale (50, 50') continue dans la zone du plan de mesure (7), recouverte par une vitre et dont la longueur correspond au moins à celle de la rangée de diodes d'émission (6, 6').

4. Dispositif selon l'une des revendications 1 à 3, caractérisé par le fait que cauque diode de réception (8, 8') est disposée dans un boîtier étanche présentant une fenêtre (80, 80'), recouverte par une vitre, en direction de la poutre d'émission correspondante (5, 5'), le boîtier étant monté entre deux plaques rectangulaires (18, 19, 18', 19') qui sont solidairement reliées à un montant (11, 11') du portique de mesure (10) et débordent latéralement au-delà du boîtier.

5. Dispositif selon l'une des revendications 1 à 4, caractérisé par le fait que les diodes d'émission (6, 6') sont constituées de diodes d'émission infrarouge d'une longueur d'onde d'environ 950 nm et que les diodes de réception (8, 8') sont conçues sous forme de photodiodes infrarouges d'une surface sensible de 2,5 x 6 mm.

6. Dispositif selon l'une des revendications 1 à 5, caractérisé par le fait que l'unité de traitement (20) est constituée d'un système de microprocesseur avec unité de mémoire et que les diodes d'émission et de réception (6, 6'; 8, 8') sont activées en synchronisme avec une fréquence d'horloge de 160 kHz.

7. Dispositif selon l'une des revendications 1 à 6, caractérisé par le fait que l'unité de traitement (20) est conçue pour compter les signaux reçus des diodes de réception (8, 8') lors d'un processus de mesure et pour, à l'aide du premier signal qui revient après l'interruption des signaux provoqué par l'objet (1), déterminer et mémoriser le nombre des diodes d'émission (6, 6') des deux poutres d'émission (5, 5') dont le faisceau n'a pas pu parvenir à la diode de réception (8, 8') correspondante.

8. Dispositif selon l'une des revendications 1 à 7, caractérisé par le fait que l'unité de traitement (20) est conçue pour saisir et afficher le diamètre et/ou le volume de l'objet (1) à partir des signaux, comptés, des deux de réception (8, 8'), des nombres, communiqués, des diodes d'émission (6, 6') des deux poutres d'émission (5, 5') dont le faisceau n'a pas pu parvenir, à travers l'objet (1), à la diode de réception (8, 8') correspondante, et de la longueur constante des deux rangées de diodes d'émission (6, 6') ainsi que des distances constantes entre les rangées de diodes d'émission (6, 6') et leurs diodes de réception correspondantes (8, 8') et des deux diodes de réception (8, 8') entre elles, avec production d'un signal de position tenant compte de la distance entre l'objet (1) et les diodes de réception (8, 8').

9. Dispositif selon l'une des revendications 1 à 8, caractérisé par le fait que l'unité de traitement (20) est conçue pour interrompre, jusqu'au processus de mesure suivant, l'activation des diodes d'émission et de réception (6, 6'; 8, 8'), dès qu'elle a reçu, en proveance des diodes de réception (8, 8'), le premier signal qui revient après l'interruption des signaux provoquée par l'objet (1), et possède une interface série (22) pour l'établissement d'un procèsverbal et la poursuite du traitement des mesures de l'objet (1), saisies.

Fig. 2

Fig. 1